# EUROPEAN PATENT SPECIFICATION

(11) **EP 0 300 802 B1**
(45) Date of publication and mention of the grant of the patent: **28.04.1993**
(21) Application number: 88306725.8
(22) Date of filing: 21.07.1988
(51) Int. Cl.: B60S 1/40

(54) **Pivot joint**
Drehverbindung
Joint d'articulation

(30) Priority: 24.07.1987 GB 8717532
(43) Date of publication of application: 25.01.1989
(73) Proprietor: TRICO FOLBERTH LIMITED, Brentford, Middlesex TW8 9HP (GB)
(72) Inventor: Frimley, Charles Henry, Berkshire (GB)
(74) Representative: Pedder, James Cuthbert

(56) References cited:
- EP-A- 0 255 352
- FR-A- 2 365 717
- GB-A- 2 041 730

## Description

This invention relates to a pivot joint which is particularly but not exclusively useful in the manufacture of windscreen wipers.

In the manufacture of windscreen wipers, a number of pivot joints are used, particularly between the arm and blade and between the various yokes and/or levers of the blade itself.

Problems exist in the manufacture of windscreen wipers due to the necessity, very often, of pivoting metal parts together. These tend to be noisy and have a tendency to suffer from wear and corrosion. Various proposals have been made for overcoming these problems, for example, by the provision of plastics members between the metal of the joints, but these have not proved entirely satisfactory from a manufacturing standpoint although they have worked satisfactorily in practice.

A proposal which has been found to be satisfactory in practice was described in our prior British Patent Application 86/02378 or 87/01948 (published as GB-A-2 186 021), corresponding to EP-A-0 231 129, published on August 5^{th}, 1987. According to this prior Application, a pivot joint comprised a joint body including first attachment means for attaching the joint body to one of the members to be pivoted, second attachment means for attaching the joint body with pivotal play to the other of the members to be pivoted, the second attachment means being provided with spring engagement means whereby the joint body can be assembled on the said other member.

In a particular application of that invention, the pivot joint was applied to the joint connecting the arm of a windscreen wiper with the wiper blade. Various proposals for attaching the arm to the pivot joint were made using both special arm terminations and a common arm termination known as a "hook" termination (see e.g. figure 9 of EP-A-0 231 129). In this application, the second attachment means comprised a tongue extending upwardly from the bottom of the joint body and having an outwardly facing detent towards its free end which cooperated with an extension on the top of the joint body to engage therebetween an edge of an aperture provided in the main yoke of windscreen wiper blade for pivotal purposes. This arrangement of the pivot of the joint is suitable for many applications but there are difficulties sometimes in the case where the windscreen wiper arm cannot be raised to any appreciable extent from the windscreen. In these circumstances it can be difficult, if not impossible, to pivot the wiper blade relative to the wiper arm sufficiently for the two to be able to be detached.

In another prior proposal (FR-A-2 365 717) there is described an arrangement for connecting the arm of a windscreen wiper with the wiper blade. This comprises a joint body having a longitudinal slot in its end away from the arm for engagement with a bolt or rivet lying across an aperture in the main yoke or lever of a windscreen wiper blade, the bolt or rivet being slid into the slot and forming a pivot for the joint body with respect to the windscreen wiper blade. The joint body is retained on the pivot by means of a downwardly extending rear portion of the joint body which engages a specially shaped edge of the aperture of the main yoke or lever. In order to ensure that the joint body cannot be accidentally detached from the wiper blade, the lower end of the said downwardly extending rear portion is provided with a spring detent which will engage the lower specially shaped edge of the aperture in the blade yoke or lever and prevent excess pivoting of the joint body unless the detent is depressed. In this way the joint body is prevented from sliding off the bolt or rivet.

However, this arrangement has certain disadvantages. It requires the bolt or rivet to be present and calls for a specially shaped edge to the aperture in the yoke or lever, both of which contribute to the cost of the windscreen wiper blade.

The present invention seeks to provide a simple pivot joint which is relatively inexpensive to manufacture and use and which enables an easy detachment of the arm and blade connected thereby.

According to the invention, a pivot joint comprises a joint body having, at one end, first attachment means for attaching the body to one of the members to be pivoted, in which the first attachment means includes a passage into which the end of the said one member extends and is fixed non-detachably therein and the joint body has second attachment means for attaching a portion of the body in an aperture in the other of the members to be pivoted with sufficient play to allow pivotal movement between them, the second attachment means being provided with sprung retention means in the form of a detent carried by a resilient tongue extending when in the assembled state of the joint body, through the aperture from a part of the joint body,which part of the joint body cannot pass through the aperture by virtue of the relative dimensions of the said part of the joint body and the said aperture, which detent is movable between a first stable position in which it renders a dimension of the said portion too large to pass through the aperture in the said other member so as to retain the joint body on the said other member and a second unstable position in which it allows the said portion to pass through the aperture so that the joint body can be assembled on and dissassembled from the said other member (Pivot joint of the type disclosed in FR-A-2 365 717), characterised in that said second attachment means extend from the other longitudinal end of the joint body remote from said one end.

Preferably, the pivot joint includes the said other member.

The detent may have an inclined surface which is engageable by the mouth of the aperture to move it from its first position to its second position when the portion is pushed into the aperture in the second member.

Stop means may be provided on the joint body, engageable with an edge of the mouth of the aperture in the second member for limiting the pivotal movement of the joint.

The invention will now be described in greater detail, by way of example, with reference to the drawings, in which:-
Figure 1 is a perspective view from above of a joint body of a pivot joint, in accordance with one embodiment of the invention, intended to provide a pivot between the arm and blade of a windscreen wiper;
Figure 2 is a longitudinal sectional view through part of an arm and part of the main yoke of a windscreen wiper pivoted together by means of the joint body shown in figure 1, and
Figures 3 and 4 are views showing variations of arm to blade joints.

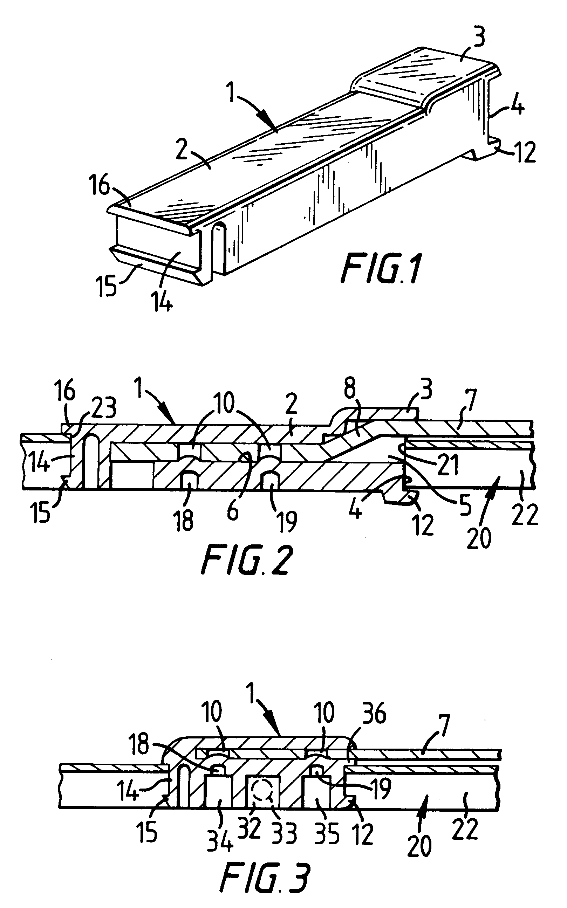

Figure 1 shows a perspective view of a joint body 1 in the form of a connector for pivotally connecting a windscreen wiper arm with the main yoke of a windscreen wiper blade harness. The body 1, which is a plastics moulding, comprises a main part 2 having a raised portion 3 at one end 4. The body is hollowed out from this end 4, providing a wide mouth 5 and a bore or passage 6 (figure 2) for receiving the end of the arm 7 of the wiper. It will be noted that this arm has an unusual termination, having a cranked end 8 and two apertures 10 for a purpose to be described. Below the mouth 5 is a projection 12 extending to the right as seen in the drawings.

The left hand end of the body 1 is provided with a rearwardly extending extension 16 from which a resilient tongue 14 extends downwards and is provided with a detent 15. The free end of the tongue 14 is located at a level of the lower part of the body 1.

In considering assembly of this pivot joint, it is to be remembered that while it is necessary to detach the blade from the arm, it is unnecessary to remove the connector from the arm. The initial operation is to assemble the connector 1 on the arm 7.

Referring particularly to figure 2, prior to the assembly, two indents 18 and 19, which are shown in this figure, have not yet been formed. The cranked end 8 of the arm 7 is inserted into the mouth 5 so that it extends down the passage 6 and engages the end of the passage. This locates the arm relative to the body 1. At this point, the two indents 18 and 19 are punched into the body 1, providing a half shear of the material of the body 1 at those positions. In so doing, the material of the body 1 is pushed into the apertures 10 in the end of the arm 7, thus securing the arm against removal from the passage 6.

To assemble the blade 20 on to the arm 7, the left hand end of the body 1 is inserted into an aperture 21 formed in the primary yoke 22 of the blade. It is to be understood that this aperture 21 may be the aperture often provided in the primary yoke for arm attachment, the only significant difference in the present case is that the pivot pin, normally used in the attachment, is missing.

The end edge 23 of the aperture 21 is pushed against the tongue 14 to flex it to the right, thereby reducing the length taken up by the body 1 and thus enabling the right hand end 4 of the body 1 to be inserted into the aperture 21 in its turn. The blade 20 is then released, allowing the tongue 14 to spring out again and provide locking of the body 1 in the blade 20.

It will be seen that the blade 12 can pivot about the vicinity of the left hand end of the body 1, the pivotal movement being limited in a first sense by engagement of the exterior of the primary yoke 22 by the arm 7 and in a second sense by engagement of the upper surface of the projection 12 on the underside of the base of the channel of the yoke 22. Movement is further permitted between the detent and the extension 16. It will of course be understood that when the arm and blade are connected, the joint body remains securely restrained within the recess 5 since outward movement of the detent 15 is prevented by the side walls around the aperture 21 over the normal range of operation of the windscreen wiper.

To remove the blade 20 from the arm 7, all that is required is to pull the joint body 1 as far out of the aperture 21 as possible. Then the blade is pushed longitudinally towards the arm 7. This moves the resilient tongue 14 to the right and allows the right hand end 4 of the body 1 to be removed from the aperture 21 in the yoke 22. Once the end 4 has cleared the aperture 21, the left hand end of the body 1 can readily be removed therefrom. It will be seen that very little relative pivoting between arm and blade is required, either for assembly or disassembly thus enabling use of this joint where the arm can only be raised a relatively short distance from the windscreen.

It will be appreciated that with this form of construction, the arm/blade profile at the connection point is low and thus provides for efficient operation and a pleasing appearance.

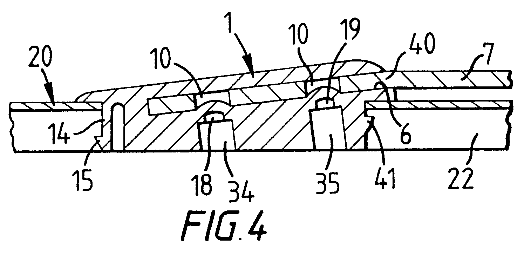

Figures 3 and 4 show variations of the form of joint body or connector which may be used. Figure 3 shows an arrangement very similar to that shown in figures 1 and 2. In this case however, the arm 7 is not cranked, providing a higher profile of the body 1. Additionally, the bottom of the body 1 has a recess 32 through which the normal pivot pin (shown in broken lines at 33) can pass without any contact. This enables the use of the invention where a primary yoke with a pivot pin is required, for example for strength. Additionally, two locating bores 34 and 35 are provided; the half shears 18 and 19 being formed at the bottom of these bores. It will also be noted that one of the limits of the pivotal motion is provided by a lip 36 instead of by the arm 7 itself.

Figure 4 shows a similar arrangement to figure 3 but in this case there is a bend 40 in the arm 7 instead of the crank formation. Since the same fixing methods are used, it is necessary to provide inclined bores 34 and 35. The cut out for use with blades having pivot pins is also omitted. Also because of the bent nature of the arm 7, the extension 12 is replaced by a detent 41, spaced from the lower edge of the body 1.

It will be appreciated that various modifications may be made to the above described embodiments without departing from the scope of the invention as defined in the claims. For example, any of the features of one embodiment may be incorporated in or exchanged with features of other embodiments where such variation is suitable.

In the embodiments of figures 1 to 4, the number of apertures in the arm 7 could be varied, either by reducing the number to one or increasing the number, most suitably to three. Where the arm receiving passage is of tapered form to assist moulding, the arm could be provided with widenings, suitably by providing half shears along the edges of the arm. The resilient element provided for attachment to the primary yoke may be provided at either or both ends.

It is also to be understood that while the invention has been described as a pivot joint for use in the construction of windscreen wipers, it is not limited to this application and may be used in suitable applications in other fields.

## Claims

1. A pivot joint comprising a joint body (1) having, at one end, first attachment means (5,6,18,19,) for attaching the body (1) to one of the members (7) to be pivoted, in which the first attachment means includes a passage (6) into which the end of the said one member (7) extends and is fixed non-detachably therein and the joint body (1) has second attachment means (14,15) for attaching a portion of the body (1) in an aperture (23) in the other (20) of the members (7,20) to be pivoted with sufficient play to allow pivotal movement between them, the second attachment means (14,15) being provided with sprung retention means in the form of a detent (15) carried by a resilient tongue (14) extending when in the assembled state of the joint body, through the aperture (23) from a part of the joint body (1), which part of the joint body cannot pass through the aperture (23) by virtue of the relative dimensions of the said part of the joint body and the said aperture (23), which detent (15) is movable between a first stable position in which it renders a dimension of the said portion too large to pass through the aperture (23) in the said other member (20) so as to retain the joint body (1) on the said other member (20) and a second unstable position in which it allows the said portion to pass through the aperture (23) so that the joint body (1) can be assembled on and disassembled from the said other member (20) characterised in that said second attachment means (14,15) extend from the other longitudinal end of the joint body(1) remote from said one end.

2. A pivot joint as claimed in claim 1, characterised in that the pivot joint includes the said other member (20).

3. A pivot joint as claimed in claim 1 or 2, characterised in that the detent (15) has an inclined surface which is engageable by the mouth of the aperture (23) to move it from its first position to its second position when the portion is pushed into the aperture (23) in the second member (20).

4. A pivot joint as claimed in any one of claims 1 to 3, characterised in that stop means (12) are provided on the joint body (1) engageable with an edge of the mouth of the aperture (23) in the second member (20) for limiting the pivotal movement of the joint.

5. A pivot joint as claimed in any one of claims 1 to 4, characterised in that the first member (7) comprises a wiper arm and the second member (20) comprises a main yoke of the blade of a windscreen wiper.

## Patentansprüche

1. Schwenklager mit einem Lagerkörper (1), der an zumindest einem Ende erste Anbringungsmittel (5,6,18,19) zur Anbringung des Körpers (1) an einem der zu schwenkenden Bauteile aufweist, wobei die ersten Anbringungsmittel einen Kanal (6) umfassen, in den sich das Ende des einen Bauteils (7) hineinerstreckt und in dem es unlösbar angebracht ist, wobei der Lagerkörper (1) zweite Anbringungsmittel (14,15) zur Anbringung eines Abschnitts des Körpers (1) in einer in dem anderen (20) der zu schwenkenden Bauteile (7,20) ausgebildeten Öffnung (23) unter ausreichendem, die Schwenkbewegung zulassendem Spiel aufweist, wobei die zweiten Anbringungsmittel (14,15) mit federnden Haltemitteln in Form einer an einer federnden Zunge (14) gelagerten Klinke (15) versehen ist, die sich im Einbauzustand des Lagerkörpers von einem Abschnitt des Lagerkörpers (1), der aufgrund der relativen Abmessungen des Abschnitts des Lagerkörpers und der Öffnung (23) nicht durch die Öffnung (23) hindurchpaßt, durch die Öffnung (23) hindurch erstreckt, wobei die Klinke (15) zwischen einer ersten stabilen Lage, in der sie die Abmessungen des Abschnittes zu groß hält, als daß dieser durch die Öffnung (23) in dem anderen Bauteil (20) hindurch paßt, so daR der Lagerkörper (1) an dem anderen Bauteil (20) gehalten ist, und einer zweiten instabilen Lage bewegbar ist, in der sie dem Abschnitt ermöglicht, durch die Öffnung (23) hindurch zu passen, so daß der Lagerkörper (1) an dem anderen Bauteil (20) angebaut und von diesem abgebaut werden kann, dadurch gekennzeichnet, daß die zweiten Anbringungsmittel (14,15) sich von dem dem einen Ende entfernten anderen Längsende des Lagerkörpers (1) erstrecken.

2. Schwenklager nach Anspruch 1, dadurch gekennzeichnet, daß das Schwenklager das andere Bauteil (20) einschließt.

3. Schwenklager nach Anspruch 1 oder 2, dadurch gekennzeichnet, daß die Klinke (15) eine geneigte Oberfläche besitzt, die mit dem Rand der Öffnung (23) in Eingriff treten kann, so daß sie aus ihrer ersten Lage in ihre zweite Lage bewegt wird, wenn der Abschnitt in die Öffnung (23) des zweiten Bauteils (20) gedrückt wird.

4. Schwenklager nach einem der Ansprüche 1 bis 3, dadurch gekennzeichnet, daß an dem Lagerkörper (1) Anschlagelemente (12) vorgesehen sind, die mit einer Kante des Randes der Öffnung (23) des zweiten Abschnitts (20) in Eingriff treten können, um die Schwenkbewegung des Lagers zu begrenzen.

5. Schwenklager nach einem der Ansprüche 1 bis 4, dadurch gekennzeichnet, daß das erste Bauteil (7) einen Wischerarm und das zweite Bauteil (20) einen Hauptbügel eines Blattes eines Scheibenwischers umfaßt.

## Revendications

1. Un élément de liaison à pivotement comprenant un corps de liaison (1) ayant, à une extrémité, un premier moyen de fixation (5, 6, 18, 19) pour fixer le corps (1) à l'un des éléments (7) à pivoter, le premier moyen de fixation comprenant un passage (6) dans lequel s'étend l'extrémité dudit élément (7) et qui y est fixée de façon non détachable, le corps de liaison (1) comprenant un deuxième moyen de fixation (14, 15) pour fixer une partie du corps (1) dans une ouverture (23) de l'autre (20) des éléments (7, 20) à pivoter avec un jeu suffisant pour permettre un mouvement de pivotement entre eux, le deuxième moyen de fixation (14, 15) étant muni d'un moyen de rétention élastique sous la forme d'un ergot (15) porté par une languette résiliente (14) s'étendant, à l'état assemblé du corps de liaison, à travers l'ouverture (23) depuis une partie du corps de liaison (1), laquelle partie du corps de liaison ne peut pas traverser l'ouverture (23) en raison des dimensions relatives de ladite partie du corps de liaison et de ladite ouverture (23), l'ergot (15) étant mobile entre une première position stable dans laquelle la dimension de ladite partie est trop importante pour permettre de traverser l'ouverture (23) dans ledit autre élément (20) afin de retenir le corps de liaison (1) sur ledit autre élément (20) et une seconde position instable dans laquelle il permet à ladite partie de traverser l'ouverture (23) si bien que le corps de liaison (1) peut êntre assemblé et désassemblé dudit autre élément (20), caractérisé en ce que ledit second moyen de fixation (14, 15) s'étend depuis l'autre extrémité longitudinale du corps de liaison (1) éloignée de ladite extrémité.

2. Un élément de liaison à pivotement selon la revendication 1, caractérisé en ce que l'élément de liaison à pivotement comprend ledit autre élément (20).

3. Un élément de liaison à pivotement selon l'une des revendications 1 ou 2, caractérisé en ce que l'ergot (15) comporte une surface inclinée qui est susceptible d'être mise en prise par l'embouchure à l'ouverture (23) pour le déplacer de sa première position vers sa seconde position quand la partie est poussée dans l'ouverture (23) dans le second élément (20).

4. Un élément de liaison à pivotement selon l'une quelconque des revendications 1 à 3, caractérisé en ce que des moyens d'arrêt (12) sont prévus sur le corps de liaison (1) et sont susceptibles de venir au contact d'un bord de l'embouchure de l'ouverture (23) dans le deuxième élément (20) pour limiter le mouvement de pivotement de l'élément de liaison.

5. Un élément de liaison à pivotement selon l'une quelconque des revendications 1 à 4, caractérisé en ce que le premier élément (7) comprend un bras d'essuieglace et le deuxième élément (20) comprend un étrier principal du balai d'un essuie-glace.
